# EUROPÄISCHE PATENTANMELDUNG

(11) **EP 3 525 055 A1**
(43) Veröffentlichungstag der Anmeldung: **14.08.2019**
(21) Anmeldenummer: 18156302.4
(22) Anmeldetag: 12.02.2018
(51) Int. Cl.: G05B 23/02

(54) **DIAGNOSESYSTEM MIT EINEM VIRTUELLEN SENSOR**

(71) Anmelder: Siemens Aktiengesellschaft, 80333 München (DE)
(72) Erfinder: Klein, Wolfram, 85579 Neubiberg (DE); Obst, Birgit, 80935 München (DE); Schenk, Tim, 84034 Landshut (DE); Wehrstedt, Jan Christoph, 81829 München (DE); Weinert, Nils, 80798 München (DE); Wever, Utz, 81539 München (DE)

(57) **Zusammenfassung**

Die Erfindung betrifft mindestens einen ersten realen Sensor (10) zum Erfassen einer Vielzahl von ersten realen Sensorwerten (12), mindestens einen weiteren realen Sensor (20) zum Erfassen einer Vielzahl von weiteren realen Sensorwerten (22), und mindestens einen virtuellen Sensor (30) für den mindestens einen ersten realen Sensor (10) zum Diagnostizieren des mindestens einen ersten realen Sensors (10) durch Bestimmen einer Vielzahl von virtuellen Sensorwerten (32) anhand einer Simulation auf der Basis der Vielzahl der weiteren realen Sensorwerte (22), Vergleichen der Vielzahl der virtuellen Sensorwerte (32) mit der Vielzahl der ersten realen Sensorwerte (12), und Detektieren einer Abweichung zwischen der Vielzahl der virtuellen Sensorwerte (32) und der Vielzahl der ersten realen Sensorwerte (12). Ferner ist die Erfindung auf einen entsprechenden virtuellen Sensor, ein entsprechendes Verfahren und ein entsprechendes Computerprogrammprodukt gerichtet.

## Beschreibung

### 1. Technisches Gebiet

Die vorliegende Erfindung betrifft ein Diagnosesystem. Ferner ist die Erfindung auf einen entsprechenden virtuellen Sensor, ein entsprechendes computer-implementiertes Verfahren und ein entsprechendes Computerprogrammprodukt gerichtet.

### 2. Stand der Technik

Sensoren sind aus dem Stand der Technik bekannt. Üblicherweise sind solche Sensoren technische Bauteile, welche physikalische oder chemische Größen bzw. Eigenschaften erfassen und in elektrische Signale umwandeln können. Beispielhafte Größen sind Temperatur, Durchfluss und Schadstoffgehalt. Herkömmlicherweise werden die Sensoren in einem System oder einer Anlage, wie einem Gebäude, einem Tunnel oder einem Fahrzeug eingesetzt.

Solche Sensoren gewinnen im Hinblick auf Industrie 4.0 und der Vernetzung von Mensch und Maschine zunehmend an Bedeutung. Automatisierungsanlagen, wie Fertigungsanlagen, weisen eine zunehmende Anzahl vernetzter Einheiten auf, insbesondere auch die genannten Sensoren. Zusätzlich zu den Sensoren sind meist Aktoren als Gegenstück vorhanden, welche die elektrischen Signale in mechanische Arbeit umsetzen können.

Der Automatisierungsgrad ist dabei umso höher, je unabhängiger komplexe Maschinen und Anlagen von menschlichen Eingriffen sind. Die Anzahl der Sensoren nimmt dementsprechend auch mit steigendem Automatisierungsgrad zu.

Beispielsweise ist es bei einer Fernsteuerung einer Anlage über Datennetze erforderlich die Zustandsdaten, wie Sensordaten, regelmäßig zu überwachen. Durch die Analyse der Sensordaten lassen sich Fehler der Anlage detektieren. Im Fehlerfall können geeignete Sicherheitsmaßnahmen eingeleitet werden, um einen Personen- oder Sachschaden zu verhindern.

Die Sensoren werden weiterhin beispielsweise in autonomen Fahrzeugen zur Gefahrenerkennung eingesetzt. Auch hier muss gewährleistet werden, dass die Sensoren Gefahren richtig erkennen, wie Personen oder sonstige Gegenstände auf der Straße. Die Abstände zwischen dem Fahrzeug und den Personen sollte durch einen Abstandsmesser richtig und zuverlässig gemessen werden.

Die moderne Sensortechnologie ermöglicht heutzutage zwar einerseits eine immer bessere Beschreibung von Maschinenzuständen in Echtzeit. Jedoch wächst andererseits auch die Menge der Zustandsdaten.
Die bekannten Ansätze für die Analyse der Datenmengen sind sehr komplex, zeitintensiv und fehleranfällig. Fehlerhafte Sensoren können zu einem unerwünschten Verhalten führen.

Die vorliegende Erfindung stellt sich daher die objektive technische Aufgabe ein Diagnosesystem bereitzustellen, welches das Fehlverhalten realer Sensoren effizient und zuverlässig diagnostizieren kann.

### 3. Zusammenfassung der Erfindung

Die oben genannte Aufgabe wird erfindungsgemäß durch ein Diagnosesystem gelöst, aufweisend:
a. mindestens einen ersten realen Sensor zum Erfassen einer Vielzahl von ersten realen Sensorwerten,
b. mindestens einen weiteren realen Sensor zum Erfassen einer Vielzahl von weiteren realen Sensorwerten, und
c. mindestens einen virtuellen Sensor für den mindestens einen ersten realen Sensor zum Diagnostizieren des mindestens einen ersten realen Sensors durch
   - Bestimmen einer Vielzahl von virtuellen Sensorwerten anhand einer Simulation auf der Basis der Vielzahl der weiteren realen Sensorwerte,
   - Vergleichen der Vielzahl der virtuellen Sensorwerte mit der Vielzahl der ersten realen Sensorwerte, und
   - Detektieren einer Abweichung zwischen der Vielzahl der virtuellen Sensorwerte und der Vielzahl der ersten realen Sensorwerte.

Dementsprechend ist die Erfindung auf ein Diagnosesystem gerichtet. Das Diagnosesystem weist verschiedene Sensoren auf, nämlich reale sowie virtuelle Sensoren.

Als reale Sensoren sind beispielsweise Temperatursensoren, Abstandsensoren, Stoffsensoren und Durchflusssensoren bekannt. Sie sind beispielsweise in Gebäuden oder Tunneln angebracht und dazu ausgebildet Sensorwerte zu erfassen, wie physikalische oder chemische Größen bzw. Eigenschaften. Die virtuellen Sensoren werden hingegen auch als Softsensoren bezeichnet. Sie sind keine real existierenden Sensoren, sondern eine Abhängigkeitssimulation von stellvertretenden Messgrößen zu einer Zielgröße.

Der virtuelle Sensor diagnostiziert einen ersten realen Sensor aus einer Vielzahl realer Sensoren gemäß der Erfindung. Der erste reale Sensor kann auch als zu diagnostizierender Sensor bezeichnet werden. Zunächst bestimmt der virtuelle Sensor eine Vielzahl virtueller Sensorwerte durch eine Simulation. Die Simulation kann auch als Schätzung sowie die virtuellen Sensorwerte als geschätzte oder simulierte Sensorwerte bezeichnet werden. Die Simulation basiert dabei auf weiteren realen Sensorwerten. Die weiteren Sensorwerte werden durch den oder die weiteren realen Sensoren erfasst. Dementsprechend sind die ersten realen Sensorwerte, welche durch den ersten realen Sensor erfasst werden, ausgenommen. Mit anderen Worten, sind die realen Sensorwerte nicht Gegenstand oder Teil der Simulation. Anschließend vergleicht der virtuelle Sensor die virtuellen Sensorwerte mit den realen Sensorwerten des ersten realen Sensors auf Abweichung. Eine Abweichung liegt vor, wenn die Sensorwerte nicht übereinstimmen bzw. sich voneinander unterscheiden. Folglich weichen die Sensorwerte vom erwarteten Verhalten ab.

Dadurch kann beispielsweise detektiert werden, ob ein Messbereich verstellt ist oder ein anderes unerwartetes Verhalten des ersten realen Sensors vorliegt, wie Fehlverhalten.

Die erfindungsgemäße Diagnose kann durch den virtuellen Sensor entsprechend für jeden anderen realen Sensor der Vielzahl der realen Sensoren durchgeführt werden.

Die Diagnose hat sich bei einem stabilen Diagnosesystem als besonders zuverlässig und genau erwiesen. Äußere Umstände können auf das Diagnosesystem einwirken und somit die Stabilität des Diagnosesystems beeinflussen. Die äußeren Umstände können auch als Einflüsse oder Bedingungen von Außen bezeichnet werden. Beispielsweise kann in einem Autotunnel der Straßenverkehr abhängig von der Tageszeit und Uhrzeit unterschiedlich ausfallen. Insbesondere gibt es weniger Verkehrsaufkommen in der Nacht. Folglich kann die Diagnose nachts durchgeführt werden oder zu anderen Uhrzeiten mit wenig Verkehrsaufkommen, um die Stabilität des Diagnosesystems sicherzustellen.

Ferner kann die Diagnose in regelmäßigen Abständen oder Intervallen wiederholt werden, beispielsweise mehrfach nachts zu einer bestimmten voreingestellten Uhrzeit. Die Simulation an einem Tag kann sich von der Simulation an einem anderen Tag unterscheiden. Daher können die Diagnoseergebnisse auch über einen längeren Zeitraum beobachtet werden. Falls eine Abweichung eines bestimmten Sensors mehrfach an unterschiedlichen Tagen auftritt, spricht dies für das Vorliegen der Abweichung und die Zuverlässigkeit bzw. Genauigkeit der Simulation. Dadurch kann die Zuverlässigkeit der Diagnose vorteilhafterweise erhöht werden.

Ferner kann das Diagnosesystem temporär oder dauerhaft um weitere Sensoren erweitert werden, um die Genauigkeit der Simulation vorteilhafterweise zu verbessern oder an Gegebenheiten anzupassen.

Mit anderen Worten, ermöglicht der virtuelle Sensor eine Schätzung der realen Sensorwerte anhand einer Simulation. Die Schätzung kann daraufhin auf Plausibilität überprüft werden.

Der Vorteil des erfindungsgemäßen Diagnosesystems liegt darin, dass die Diagnose eines oder mehrerer realer Sensoren im Gegensatz zum Stand der Technik autonom durch den virtuellen Sensor durchgeführt wird. Mit anderen Worten, ist das Diagnosesystem durch den virtuellen Sensor in der Lage zur Selbstdiagnose ohne Einwirkung anderer Einheiten oder Komponenten außerhalb des Diagnosesystems.

Dadurch kann Personal sowie Zeit eingespart werden. Die Zeit bezieht sich hierbei sowohl auf die Reaktionszeit einen Fehler zu erkennen, als auch auf die Zeit, um eine Fehlerursache zu suchen. Folglich können auch die Kosten reduziert werden. Weiterhin ist das Diagnosesystem vorteilhafterweise weniger fehleranfällig und zuverlässiger.

Ferner können dadurch Störfälle im Vergleich zum Stand der Technik schneller gelöst werden und die Personen können anhand der Diagnose deutlich schneller reagieren. Die Reaktionszeit wird wesentlich verkürzt. Ausfallzeiten einer Automatisierungsanlage durch fehlerhafte Sensoren können reduziert oder sogar ganz vermieden werden. Die Anlagen oder die Sensoren können beispielsweise im Störfall gewartet oder abgeschaltet werden.

In einer Ausgestaltung ist die Simulation eine Strömungssimulation, eine thermische Simulation und/oder eine Stofftransport Simulation. Dementsprechend können unterschiedliche weitere reale Sensordaten für die Simulation verwendet werden. Beispielsweise können Durchflussströmungen und/oder Temperaturen der entsprechenden Durchflusssensoren sowie Temperatursensoren in die Simulation mit einfließen. Dadurch können vorteilhafterweise verschiedene Sensordaten berücksichtigt werden und das Diagnosesystem flexibel an die Anlage, wie Gebäude oder Tunnel, angepasst werden.

In einer weiteren Ausgestaltung ist der virtuelle Sensor weiterhin, eingerichtet zum Anpassen der Simulation
- bei einer Änderung des Diagnosesystems, des mindestens einen ersten realen Sensors, des mindestens einen weiteren realen Sensors, des mindestens einen virtuellen Sensors und/oder
- bei einer Änderung äußerer Umstände des Diagnosesystems. Dementsprechend kann die Simulation auch an unterschiedliche Gegebenheiten dynamisch und flexibel angepasst werden. Einheiten innerhalb des Diagnosesystems, das Diagnosesystem selbst oder äußere Umstände können sich im Laufe der Zeit ändern. Diese Änderungen können in der Simulation und folglich auch der Diagnose berücksichtigt werden indem die Simulation basierend auf den Änderungen angepasst wird.

In einer weiteren Ausgestaltung sind die äußeren Umstände Tageszeiten, Jahreszeiten oder Wetterbedingungen. Dementsprechend können äußere Umstände auf das Diagnosesystem einwirken. Um Wiederholungen zu vermeiden, wird auf die obigen Ausführungen verwiesen.

In einer weiteren Ausgestaltung ist der virtuelle Sensor weiterhin eingerichtet ist zum
Einleiten mindestens einer Maßnahme ausgewählt aus der Gruppe, bestehend aus:
- Ausgeben eines Warnsignals, eines Alarmsignals, oder eines sonstigen Signals, und
- Ausgeben einer Nachricht mit einer Anweisung den mindestens einen ersten realen Sensor zu warten, den mindestens einen ersten realen Sensors oder das Diagnosesystem auszuschalten, falls die Abweichung mindestens einen Grenzwert überschreitet.

Dementsprechend kann der virtuelle Sensor weiterhin überprüfen, ob die Abweichung einen Grenzwert oder mehrere unterschiedliche Grenzwerte überschreitet und folglich außerhalb eines Toleranzbereichs liegt. Bei Grenzwertüberschreitung kann der virtuelle Sensor einen oder mehrere Maßnahmen ergreifen. Er kann Signale oder Nachrichten versenden, um Personen in Kenntnis zu setzen oder zu weiteren Schritten aufzufordern. Die Maßnahmen können auch Stufenweise ergriffen werden. Beispielsweise sendet der virtuelle Sensor als Erstes ein Warnsignal, danach weitere Nachrichten oder Signale. Die Maßnahmen können auch an unterschiedliche Grenzwerte gekoppelt sein. Der Vorteil liegt darin, dass nach erfolgter Diagnose sehr schnell Maßnahmen ergriffen werden und der diagnostizierte Sensor dadurch effizient und zuverlässig behandelt wird.

Die Erfindung betrifft ferner einen entsprechenden virtuellen Sensor für das obige Diagnosesystem.

Die Erfindung betrifft ferner ein entsprechendes computer-implementiertes Verfahren, aufweisend die Schritte:
a. Erfassen einer Vielzahl von ersten realen Sensorwerten durch mindestens einen ersten realen Sensor,
b. Erfassen einer Vielzahl von weiteren realen Sensorwerten durch mindestens einen weiteren realen Sensor,
c. Diagnostizieren des mindestens einen ersten realen Sensors durch mindestens einen virtuellen Sensor für den mindestens einen ersten realen Sensor durch
   - Bestimmen einer Vielzahl von virtuellen Sensorwerten anhand einer Simulation auf der Basis der Vielzahl der weiteren realen Sensorwerte,
   - Vergleichen der Vielzahl der virtuellen Sensorwerte mit der Vielzahl der ersten realen Sensorwerte,
   - Detektieren einer Abweichung zwischen der Vielzahl der virtuellen Sensorwerte und der Vielzahl der ersten realen Sensorwerte .

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- FIG 1: zeigt eine schematische Darstellung eines erfindungsgemäßen Diagnosesystems.
- FIG 2: zeigt ein Ablaufdiagramm eines erfindungsgemäßen Verfahrens.

### 5. Beschreibung der bevorzugten Ausführungsformen

Im Folgenden werden bevorzugte Ausführungsformen der vorliegenden Erfindung in Bezug auf die Figuren beschrieben.

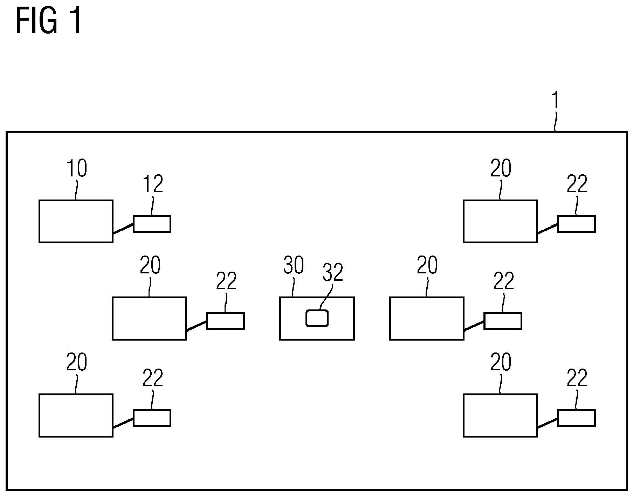

Figur 1 zeigt eine Detailansicht eines erfindungsgemäßen Diagnosesystems 1. Das Diagnosesystem 1 weist eine Vielzahl von realen Sensoren 10, 20 zum jeweiligen Erfassen einer Vielzahl von ersten und weiteren realen Sensorwerten 12, 22 auf. Zusätzlich zu den realen Sensoren 10, 20 weist das Diagnosesystem 1 einen oder mehrere virtuelle Sensoren 30 auf.

Der virtuelle Sensor 30 diagnostiziert den ersten realen Sensor 10 mit Hilfe eines Simulationsansatzes bzw. des erfindungsgemäßen Verfahrens. Mit anderen Worten, werden virtuelle Sensorwerte 32 nicht nur für die Beobachtung eines Gebäude oder Tunnelabschnittes gemäß dem Stand der Technik herangezogen, sondern für die Diagnose eines realen Sensors 10, 20. Die Diagnose lässt sich rotierend auf jeden realen Sensor 10, 20 der Vielzahl der realen Sensoren anwenden. Beispielsweise kann die Diagnose regelmäßig über einen längeren Zeitraum nachts rotierend für die realen Sensoren 10, 20 der Vielzahl der realen Sensoren durchgeführt werden, wie weiter oben beschrieben.

Während der Diagnose S3 stellt der virtuelle Sensor 30 ein Simulationsmodell für den ersten realen Sensor 10 auf. Das Simulationsmodell wird auf Basis von allen anderen weiteren realen Sensorwerten 22 bis auf die Sensorwerte 12 des ersten realen Sensors 10 kalibriert. Danach bestimmt der virtuelle Sensor 30 für den ersten realen Sensor 10 die virtuellen Sensorwerte 32 basierend auf dem Simulationsmodell. Durch Vergleich der realen Sensorwerte 12 mit den virtuellen Sensorwerten 32 innerhalb eines vorgegebenen Toleranzfensters können defekte oder "gehackte" Sensoren identifiziert werden.

Bei der Diagnose S3 ist es von Vorteil, einen Zeitraum auszuwählen, in dem das Verhalten im Tunnel stationär ist. Ferner beeinflussen andere Umstände die Diagnose und können beachtet werden, wie die Lage der Sensoren und die Qualität der virtuellen Sensorwerte.

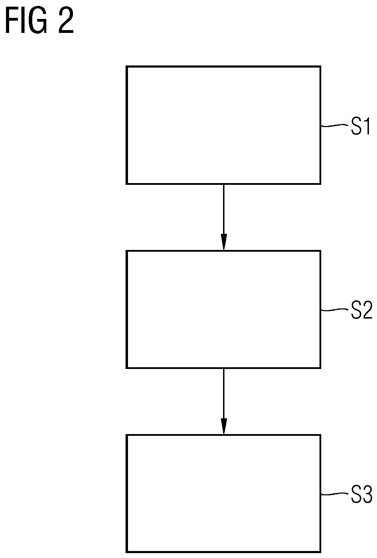

Figur 2 zeigt das erfindungsgemäße Verfahren mit den drei Verfahrensschritten in einem Ablaufdiagramm. Die Verfahrensschritte das Erfassen einer Vielzahl von ersten realen Sensorwerten S1, das Erfassen einer Vielzahl von weiteren realen Sensorwerten S2 und das Diagnostizieren S3 werden durch das Diagnosesystem 1 durchgeführt, wie weiter oben beschrieben.

Im Falle einer Vielzahl realer Sensoren, kann das erfindungsgemäße Verfahren auch für mehrere reale Sensoren gleichzeitig durchgeführt werden, beispielsweise indem mehrere reale Sensoren durch virtuelle Sensoren ersetzt werden. Dies hat den Vorteil, dass alle Kombinationen realer Sensoren berücksichtigt werden und auch Paare defekter realer Sensoren erkannt werden können.

### Bezugszeichenliste

- 1: Diagnosesystem
- 10: erster realer Sensor
- 12: erste reale Sensorwerte
- 20: weiterer realer Sensor
- 22: weitere reale Sensorwerte
- 30: virtueller Sensor
- 32: virtuelle Sensorwerte
- S1: erster Verfahrensschritt
- S2: zweiter Verfahrensschritt
- S3: dritter Verfahrensschritt

## Patentansprüche

1. Diagnosesystem (1), aufweisend:
a. mindestens einen ersten realen Sensor (10) zum Erfassen einer Vielzahl von ersten realen Sensorwerten (12),
b. mindestens einen weiteren realen Sensor (20) zum Erfassen einer Vielzahl von weiteren realen Sensorwerten (22), und
c. mindestens einen virtuellen Sensor (30) für den mindestens einen ersten realen Sensor (10) zum Diagnostizieren des mindestens einen ersten realen Sensors (10) durch
- Bestimmen einer Vielzahl von virtuellen Sensorwerten (32) anhand einer Simulation auf der Basis der Vielzahl der weiteren realen Sensorwerte (22),
- Vergleichen der Vielzahl der virtuellen Sensorwerte (32) mit der Vielzahl der ersten realen Sensorwerte (12), und
- Detektieren einer Abweichung zwischen der Vielzahl der virtuellen Sensorwerte (32) und der Vielzahl der ersten realen Sensorwerte (12).

2. Diagnosesystem (1) nach Anspruch 1, wobei die Simulation eine Strömungssimulation, eine thermische Simulation und/oder Stofftransport Simulation ist.

3. Diagnosesystem (1) nach Anspruch 1 oder Anspruch 2, wobei der virtuelle Sensor (30) weiterhin zum Anpassen der Simulation eingerichtet ist
- bei einer Änderung des Diagnosesystems (1), des mindestens einen ersten realen Sensors (10), des mindestens einen weiteren realen Sensors (20), des mindestens einen virtuellen Sensors (30) und/oder
- bei einer Änderung äußerer Umstände des Diagnosesystems (1).

4. Diagnosesystem (1) nach Anspruch 3, wobei die äußeren Umstände Tageszeiten, Jahreszeiten oder Wetterbedingungen sind.

5. Diagnosesystem (1) nach einem der vorhergehenden Ansprüche, wobei der virtuelle Sensor (30) weiterhin zum
Einleiten mindestens einer Maßnahme ausgewählt aus der Gruppe, bestehend aus:
- Ausgeben eines Warnsignals, eines Alarmsignals, oder eines sonstigen Signals, und
- Ausgeben einer Nachricht mit einer Anweisung den mindestens einen ersten realen Sensor (10) zu warten, den mindestens einen ersten realen Sensors (10) oder das Diagnosesystem (1) auszuschalten,
falls die Abweichung mindestens einen Grenzwert überschreitet,
eingerichtet ist.

6. Virtueller Sensor (30) für ein Diagnosesystem (1) nach einem der vorhergehenden Ansprüche 1 bis 5.

7. Computer-implementiertes Verfahren, aufweisend die Schritte:
a. Erfassen einer Vielzahl von ersten realen Sensorwerten (12) durch mindestens einen ersten realen Sensor (10),
b. Erfassen einer Vielzahl von weiteren realen Sensorwerten (22) durch mindestens einen weiteren realen Sensor (20), und
c. Diagnostizieren des mindestens einen ersten realen Sensors (10) durch mindestens einen virtuellen Sensor (30) für den mindestens einen ersten realen Sensor (10) durch
- Bestimmen einer Vielzahl von virtuellen Sensorwerten (32) anhand einer Simulation auf der Basis der Vielzahl der weiteren realen Sensorwerte (22), und
- Vergleichen der Vielzahl der virtuellen Sensorwerte (32) mit der Vielzahl der ersten realen Sensorwerte (12),
- Detektieren einer Abweichung zwischen der Vielzahl der virtuellen Sensorwerte (32) und der Vielzahl der ersten realen Sensorwerte (12).

8. Computerprogrammprodukt mit einem Computerprogramm, das Mittel zur Durchführung des Verfahrens nach Anspruch 7 aufweist, wenn das Computerprogramm auf einer programmgesteuerten Einrichtung zur Ausführung gebracht wird.
